Europäisches Patentamt

European Patent Office

Office européen des brevets

(19)

(11) Publication number: 0 333 402

A2

(12) EUROPEAN PATENT APPLICATION

(21) Application number: 89302438.0

(22) Date of filing: 13.03.89

(51) Int. Cl.⁴: G05B 19/12

(30) Priority: 15.03.88 GB 8806119

(43) Date of publication of application:
20.09.89 Bulletin 89/38

(84) Designated Contracting States:
AT BE CH DE ES FR IT LI NL SE

(71) Applicant: IMI PACTROL LIMITED
P.O. Box 123 10Pit Hey Place
Skelmersdale Lancashire, WN8 9PS(GB)

(72) Inventor: Collins, Roderick John
Little Bluestone Cottage Bluestone Lane
Mawdesley Ormskirk, L40 2RH(GB)

(74) Representative: Lane, Michael John et al
IMI Plc Patents and Licensing Department
P.O. Box 216
Birmingham B6 7BA(GB)

(54) Electronic programmable logic and timing device.

(57) A programmable electronic logic and timing device for controlling, eg. domestic hot water/central heating systems comprises a programmable timer/control module (10), a plurality of discrete sets of encoded information, for example bar codes (22), corresponding to respective programmes and reading means, for example a light pen (12), connectable to the module (10) for reading a selected set of such information so as to cause the device to become programmed in accordance with the selected set of information.

The device is readily programmable and avoids the need for relatively expensive items such as programming buttons, displays and associated circuitry.

EP 0 333 402 A2

## ELECTRONIC PROGRAMMABLE LOGIC AND TIMING DEVICE

The present invention relates to electronic programmable logic and timing devices.

At present, many large scale integrated circuits having a dedicated function are being produced from microcomputer based circuits and uncommitted logic arrays.

The end product is typically an electronic assembly capable of controlling one or more output lines on a time or logic basis, often triggered by a change in state of one or more input lines.

The end-user of such a product is given a limited programming facility to enable local logic and/or timing functions to be carried out. To enable programming to be achieved by the end-user, one or more programming push buttons or switches may be provided together with some form of display to enable the user's added program to be verified. The local programming feature thereby adds significant costs to the overall controller cost.

In addition, some end users, particularly in the domestic situation, find such programming difficult and this can lead to either a reluctance to buy the product or an inability to use all its features correctly.

One common example of a programmable controller used in a domestic situation is the central heating/hot water time controller, where the operation of a central heating boiler and water pump can be automatically controlled by programmable time switches.

Another product is a programmable time switch to control the operation of a domestic electric immersion heater, the timer being set to energise the heater when the electrical supply tariff is at its lowest.

Recently there has been a move away from electro-mechanical timers and into electronic-based units. As described above all current units suffer from the problem of being difficult to programme while costing typically 50% more than their electro-mechanical equivalents.

In our co-pending patent application No 8720247 we describe and claim an electronic programmable logic and timing device comprising interconnectable modules containing respectively a programmable timer/control circuit and programming means, arranged such that when a desired programme has been set using the programming means (whilst the latter is connected to the programmable timer/control module) the programming module can be detached from the timer/control module leaving only the latter module permanently connected to the system being controlled. Usually, the timer/control module would be thus programmed during the production stage, the ultimate user therefore usually purchasing only the pre-programmed timer/control module which, because it is devoid of programmiing facilities, is relatively cheap. It also obviates the need for the user to programme the module himself. However, it does, of course, suffer from the disadvantage that it is inflexible although the user could alter the programme, if desired, by purchasing the programming module, connecting it to the timer/control module and re-programming it as desired; this, however, will largely defeat the cost advantage.

It is an object of the present invention to provide an improved programmable logic and timing device which has the cost advantages of the device described and claimed in our afore-mentioned application but which is more flexible in that it is readily programmable and, optionally, re-programmable by the user so as to operate according to any desired one of a plurality of pre-determined programmes.

According to one aspect of the present invention, therefore, there is provided an electronic logic and timing device comprising a programmable timer/control module, a plurality of discrete sets of encoded information corresponding to respective pre-determined programmes, and reading means forming part of, or connectable to, the timer/control module and adapted to "read" a selected one or more of said sets of encoded information thereby causing the timer/control module to become programmed in accordance with the selected set(s).

Preferably, the sets of encoded information are each in the form of a bar code, that is to say, typically, a number of lines of various thicknesses printed, in spaced, parallel relationship with one another, on a background of contrasting colour, for example black lines on a white background, and the reading means comprises a combination of a light source and a light sensor, for example in the form of a so-called "light pen". The use and mode of operation of bar codes is well-known in, for example, the merchandising field and need not, therefore, be described in detail herein.

However, the encoded information may be of any other suitable form, for example, in magnetic form stored on, for example, a card in which case there would, of course, be provided a suitable reading means therefor either integral with, or connectable to, the module.

Preferably, the light pen is connectable by a lead and plug-in-socket connection to the timer/control module and is disconnected therefrom once the desired programme has been input into the module; it may, however, by permanently connected to the module. Alternatively, the light source and light sensor may form an integral part of the module.

The sets of encoded information, for example the bar codes, are preferably contained collectively in a booklet (but may alternatively, for example, be on individual cards or the like) and the user then simply programmes the timer/control module by causing the reading means to read the desired information, for example by passing the light pen over the bar code corresponding to the desired programme. Needless to say, it is necessary for there to be, for the benefit of the user, an identification of the programme represented by each bar code and this may be by means of an appropriate textual or graphical explanation which, after input of the programme, may be affixed to the timer/control module in order to serve as a reminder to the user of the prevailing programme he or she has selected. As indicated earlier, a device of the invention is preferably continually re-programmable whereby the user may vary the programme from time-to-time, for example, in the case of a heating/hot water system, from a typical summer cycle to a winter one and vice-versa.

Where a device of the invention is intended to control a central heating/hot water system, it will be appreciated that the encoded information essentially comprises information relating to, inter alia, on/off times and mode (ie. central heating and/or water heating) selection and that the timer/control module will need to have reference to the time of day. This may be achieved by incorporating into the module means to set, and optionally to display, the time of day, although the provision of such a display is preferably avoided because it is a relatively expensive feature and is largely redundant. However, the cost of a device of the invention may be further reduced by programming the time into the module by means of encoded information, for example bar codes corresponding to hours and, say, quarter hours (or even smaller units of time) whereby the approximate time of day may be entered.

According to a second aspect of the invention there is provided a logic and timing module programmable in the aforesaid manner. Preferably the module comprises an integrated circuit which performs timekeeping and programme storage functions and which is selected to demand a very low supply power, typically less than 10 MA at 1.5 volts d.c., the integrated circuit being disposed in the timer/controller module and preferably being coupled permanently to a stand-by battery power source in the module.

According to a third aspect of the invention, there is provided a method of controlling a heating installation, for example a domestic central heating and/or hot water installation, utilising a device as defined above.

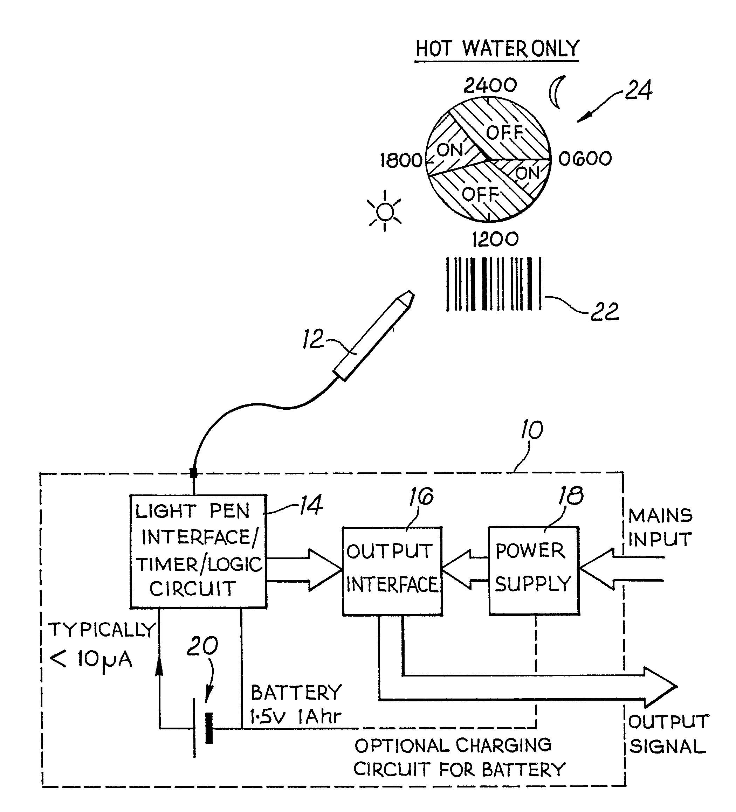

The invention will now be described in more detail, by way of example only, with reference to the accompanying drawing, which shows diagrammatically one embodiment of a programmable logic and timing device in accordance with the invention.

The device comprises a timer/controller module 10 and a light pen 12 which is capable of being plugged into the module 10 when a programming or reprogramming step is to be carried out. In the drawing, the light pen 12 is shown plugged into the module 10.

The module 10 is adapted to be permanently mounted in its operational site, for example, adjacent to a domestic central heating boiler, and contains an electronic timer/logic circuit/light pen interface 14, an output interface 16 and a power supply 18. The power supply 18 is coupled to the mains and supplies low voltage d.c. to the circuits 14 and 16 and to the light pen 12. A long life battery 20, which can be a primary source or be re-chargeable, is provided in the module 10 to maintain operation of the timer/logic circuit 14 in the event of mains failure. The output interface provides output signals for transmission to the relevant systems or product being controlled, for example for controlling the on/off times of a domestic central heating/hot water system.

In order to programme the module 10, the user simply passes the light pen 12 over a selected bar code, shown at 22, being one of a number of bar codes corresponding to different programmes. Each bar code is accompanied by a graphic indication 24 of the programme to which it relates. In the example illustrated, the programme provides for the heating of hot water only between 6 and 9 o'clock in the morning and between 5 and 9 o'clock in the evening. There will also be provided a series of bar codes (not shown) whereby the time of day may be input into the module 10. The module may include a visual indicator, for example a neon lamp, arranged to illuminate and thereby signify acceptance of the input programme or other data.

Once the programming step has been carried out, the light pen 12 may be unplugged from the module 10 and the user then sees only a "black box" which needs no adjustment in the normal course of events and which provides the user with a tamperproof time controller capable of remaining on time for the normal operational life of the product while obviating the need for costly programming components such as programming push buttons, displays and associated circuitry.

If reprogramming is required within the life of the product, the light pen 12 is simply plugged into the module 10, is passed over the appropriate bar code and is then unplugged.

The module 10 may further include one or more manual over-ride switches, eg. push-buttons, and mode indicators, eg. neon lamps, as is conventional in products of this type.

## Claims

1. A programmable electronic logic and timing device comprising a timer/control module (10) programmable by programming means, characterised in that the programming means comprises a plurality of discrete sets of encoded information (22) corresponding to respective pre-determined programmes, and reading means (12) forming part of, or connectable to, the said module and adapted to "read" a selected one or more of said sets of encoded information thereby causing the module to become programmed in accordance with the selected set(s).

2. A device according to claim 1 characterised in that each set of encoded information is in the form of a bar code (22).

3. A device according to claim 2 characterised in that the reading means is a light pen (12).

4. A device according to any one of claims 1 to 3 characterised in that the sets of information are contained collectively in a booklet or the like.

5. A device according to any one of claims 1 to 4 characterised in that wherein each set of encoded information by a textual and/or graphical identification (24) of the programme that it represents.

6. A device according to any one of claims 1 to 5 characterised in that wherein real time is programmable into the module (10).

7. A device according to claim 6 characterised in that real time is programmable into the module by means of encoded time information readable by said reading means (12) whereby at least approximate real time of day may be recorded by the module (10).

8. A device according to claim 7 characterised in that said encoded time information is in the form of a plurality of bar codes corresponding to hours and, for example, minutes.

9. A device according to any one of claims 1 to 8 characterised in that it is, once programmed, re-programmable in an aforesaid manner.

10. A programmable electronic logic and timing device characterised in that it comprises a timer/control module (10) that is programmable or re-programmable in a manner set out in any one of claims 1 to 8.

11. A method of controlling the on/off cycles of a heating installation, for example a central heating and/or hot water installation, characterised in that it utilises a device according to claim 10 that has been programmed in a manner set out in any one of claims 1 to 8.

12. The use, for the control of a heating installation, of a device according to claim 10 that has been programmed in a manner set out in any one of claims 1 to 8.